# EUROPEAN PATENT SPECIFICATION

(11) **EP 2 512 824 B1**
(45) Date of publication and mention of the grant of the patent: **27.05.2015**
(21) Application number: 09852386.3
(22) Date of filing: 16.12.2009
(51) Int. Cl.: B60C 1/00, C08L 9/00, C08L 9/06, C08K 5/16, C08K 5/548

(54) **HIGH SILICA CONTENT FOR HEAVY VEHICLE TIRES**
REIFEN MIT HOHEM SILICAGEHALT FÜR SCHWERLASTFAHRZEUGE
HAUTE TENEUR EN SILICE POUR PNEUS DE VÉHICULES LOURDS

(43) Date of publication of application: 24.10.2012
(73) Proprietor: MICHELIN Recherche et Technique S.A., 1763 Granges-Paccot (CH); Compagnie Générale des Etablissements Michelin, 63000 Clermont-Ferrand (FR)
(72) Inventor: MORELAND, John, Calloway, Greer, SC 29650 (US)
(74) Representative: Dossmann, Gérard
(86) International application number: PCT/US2009/068135
(87) International publication number: WO 2011/075121

(56) References cited:
- WO-A1-02/072689
- FR-A1- 2 923 831
- US-A- 5 641 820
- US-A1- 2001 034 392
- US-A1- 2004 261 926
- US-A1- 2007 299 197
- US-A1- 2008 149 240
- US-A1- 2009 050 251
- US-A1- 2009 054 575
- US-B1- 6 242 523
- US-B1- 6 590 017
- DATABASE WPI Week 200963 Thomson Scientific, London, GB; AN 2009-J05676 XP002699298, & KR 100 894 453 B1 (HANKOOK TIRE MFG CO LTD) 22 April 2009 (2009-04-22)
- DATABASE WPI Week 200921 Thomson Scientific, London, GB; AN 2009-F36977 XP002699299, & JP 2009 040915 A (BRIDGESTONE CORP) 26 February 2009 (2009-02-26)

## Description

### BACKGROUND OF THE INVENTION

### Field of the Invention

This invention relates generally to tire treads and more specifically, to heavy vehicle tires having a high silica content.

### Description of the Related Art

Tire wear is of concern to those who must purchase tires because the greater the tire wear, the more expensive it is to operate a vehicle due to the expense of replacing worn tires. This is of more concern to those who operate large fleets of vehicles such as truck fleets or bus lines.

Improving tire wear is often a trade off that must be made against another valued physical property such as, for example, the processability of the uncured rubber composition. If the uncured rubber composition is too viscous, then the material cannot be mixed adequately to disperse the components throughout the composition. Furthermore, processing the material, such as through an extruder, can also be much more difficult and time consuming if the material is too viscous.

As is known, the selection of reinforcing materials can have an impact on the physical properties of tires. Carbon black has been used for many years as a reinforcement filler of choice. Silica and other so-called white filler have been used also, often providing more desired characteristics than can be achieved with carbon black. An example of silica use as a filler is disclosed in U.S. Patent No. 5,227,425.

Generally truck tires and other heavy vehicle tires are manufactured using a rubber composition that is reinforced with carbon black. Heavy vehicles include, for example, truck tires, bus tires, subway train tires, tractors, trailers, aircraft tires, agricultural, earthmover and other off-the-road (OTR) tires and generally do not include, for example, passenger car vehicles and light trucks. While it has been known to use silica as a filler in heavy vehicle tires, carbon black is typically used because the carbon black filler has provided a tire having better wear properties than those that contain silica. A disadvantage of using carbon black is that carbon black is produced from petroleum, a natural resource that is becoming more costly and less available. Therefore it would be advantageous to remove carbon black from heavy vehicle tires and replace it with silica to reduce the consumption of petroleum.

There is a need for improved materials to provide an optimum combination of tire performances.

Document WO 02/072689 discloses a rubber composition for producing a tyre casing tread having improved wear resistance. The rubber composition comprises a diene elastomer, a hydrocarbon plasticising resin and a plasticising oil. The composition does not contain an amide processing aid.

Document FR 2 923 831 discloses a rubber composition which can be used for the manufacture of tires, said composition being based on an diene elastomer, a reinforcing inorganic filler, a coupling agent and a specific hydroxysilane. The composition does not contain an amide processing aid.

### SUMMARY OF THE INVENTION

Particular embodiments of the present invention include compositions useful for the manufacture of tire treads, especially tire treads for heavy vehicles, as well as the tires having treads made of such compositions. Some embodiments include a heavy vehicle tire tread formed from a material that is based upon a cross-linkable rubber composition, the cross-linkable rubber composition comprising, per 100 parts by weight of rubber, between 35 and 60 phr of a solution polymerized styrene-butadiene rubber having a styrene content of between 10 wt. % and 35 wt. %, between 35 and 60 phr of a polybutadiene, and between 45 and 110 phr of silica. Such material further includes between 1 and 8 phr of an amide processing aid, the processing aid comprising one or more amides of the form 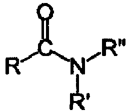 wherein R is an aliphatic chain of between 14 and 20 carbons, R' is selected from H or an aliphatic chain of between 1 and 4 carbons and R" is selected from an aliphatic chain of between 1 and 4 carbons having an -OH moiety.

Such material may further include a sulfur-containing organosilicon silane coupling agent and a sulfur curing system.

The foregoing and other objects, features and advantages of the invention will be apparent from the following more detailed descriptions of particular embodiments of the invention.

### DETAILED DESCRIPTION OF PARTICULAR EMBODIMENTS

Particular embodiments of the present invention include rubber compositions and articles, including tire treads for heavy vehicles, that are reinforced with a silica filler and little or no carbon black filler. When large amounts of silica, *e.g.,* between about 45 and about 110 parts by weight per hundred parts by weight of rubber (phr), are used in rubber formulations, the viscosity of the resulting rubber composition exceeds the level at which the rubber mixture can be easily mixed and further processed. Mixing the resulting high viscosity material well enough to adequately disperse all the components of the rubber composition and then extruding or otherwise processing the rubber composition into desired products is difficult.

Frequently a processing aid, such as oil, is added to a rubber mixture comprising silica to decrease the viscosity enough so that the mixing and further processing of the rubber composition may be accomplished as required. However, as is typically the result of changing a rubber composition to improve one physical characteristic, in this case its processability, some other physical characteristic is compromised. Indeed, when an oil is added to the rubber composition to improve its processability, the trade off is that the wear properties of the cured rubber are compromised.

Particular embodiments of the present invention include a high silica content rubber composition that is useful for heavy vehicle tires. These embodiments comprise a processing aid that surprisingly improves the processability of the rubber composition without compromising the durability of the cured rubber composition. The processing aid comprises one or more amides of the form: 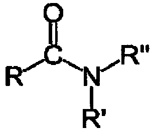 wherein R is an aliphatic chain of between 14 and 20 carbons, R' is selected from H or an aliphatic chain of between 1 and 4 carbons and R" is selected from an aliphatic chain of between 1 and 4 carbons, the chain further having an -OH moiety. Examples of such amides include N-(2-hydroxyethyl) hexadecanamide and N-(2-hydroxyethyl) octadecanamide, wherein R is an alkane chain of 16 and 18 carbons respectively, R' is H and R" is - CH₂CHOH. Optionally, in particular embodiments, the R' constituent may include one or more -OH moieties and/or the R" constituent may include more than one -OH moiety. Optionally, in some embodiments, R' is H.

The amide processing aid may include just one of the useful amides or it may include a mixture of the useful amides. In particular embodiments, the useful amides have molecular weights of between 260 and 450 g/mole.

The amide processing aid is added to a silica reinforced rubber composition in an amount of between 1 and 8 phr, or alternatively between 2 and 7 phr, between 2 and 5 phr, between 1 and 3 phr or between 1 and 6 phr.

The amide processing aid is available, for example, from Struktol as HT 254, which contains a mixture of N-(2-hydroxyethyl) hexadecanamide and N-(2-hydroxyethyl) octadecanamide. Struktol is a corporation with offices in Stow, Ohio.

The amide processing aid is particularly useful for rubber compositions reinforced with silica for use in heavy vehicle tire treads. Particular embodiments of the present invention therefore include heavy vehicle tire treads made with rubber compositions having high silica content and the amide processing aid. "Heavy vehicle tire treads" as used herein may include both the treads of new tires, the treads on tires that have been re-treaded and the tread bands (cured or uncured) that can be applied to buffed tires during the re-tread process. Particular embodiments of the present invention are not directed to passenger car tires and other light duty tires.

While many of the embodiments disclosed below are directed to treads, this invention should not be considered to be so limited. Indeed the invention is useful for many applications that require rubber compositions having the physical properties disclosed below including, for example, good wear properties.

Particular embodiments of the present invention include rubber compositions comprising highly unsaturated diene elastomers, silica reinforcing filler, a proportionate amount of silane coupling agent and a sulfur curing system. In particular embodiments, the rubber compositions are cured with just a small amount of sulfur (or no sulfur) and a proportionate amount of a sulfenamide accelerator, to further provide better wear characteristics of the cured rubber.

Heavy vehicles tires can sometimes be classified as to their use. For example, truck tires may be classified as drive tires (those that are powered by the truck engine) and steer tires (those that are used to steer the truck). The tires on the trailer of a tractor-trailer rig are also classified separately. While embodiments of the present invention are recognized as being suitable for each type of heavy vehicle tires, other embodiments are especially suited and limited to the drive tires of a tractor as used in a tractor-trailer rig.

Particular embodiments are also limited to relatively thin treads, e.g., treads that are between 10 and 19 mm thick as measured from the bottom of the tread groove to the top surface of the tread. Alternatively the treads may have a thickness of between 12 and 18 mm, between 13 and 18 mm or between 12 and 18 mm. Particular embodiments include any of the tractor-trailer tires with the relatively thin treads or alternatively, just the tractor steer tires with relatively thin treads. These tread measurements are measured before being worn through use on a truck, *i.e.,* as new or unused treads. Such treads would also include those placed on a tire carcass during the retreading process as well as the new tread bands that are to be bonded to a tire carcass during the retreading process.

It is recognized that treads are often manufactured in a cap/base layered construction. In such treads, the cap layer is the ground-contacting layer and the base layer is a transitional layer situated between the cap layer and the tire carcass. The base layer underlies and supports the cap layer. As used herein, the heavy vehicle tire tread may be of the cap/base layered construction, of other layered constructions or constructed of only one layer. Therefore, a "tread manufactured" from the rubber compositions disclosed herein is recognized to mean that if the tread is of a layered construction, at least one of the layers is manufactured from such rubber compositions.

Particular embodiments of the present invention include heavy vehicle tire treads made from a material that is based upon a cross-linkable rubber composition reinforced with silica. The term "based upon' as used herein recognizes that the treads or other rubber articles are made of vulcanized or cured rubber compositions that were, at the time of their assembly, uncured. The cured rubber composition is therefore "based upon" the uncured rubber composition. In other words, the cross-linked rubber composition is based upon the cross-linkable rubber composition.

The useful elastomers of the rubber composition disclosed herein include highly unsaturated diene elastomers. Diene elastomers or rubber is understood to mean those elastomers resulting at least in part (*i.e.,* a homopolymer or a copolymer) from diene monomers (monomers bearing two double carbon-carbon bonds, whether conjugated or not). Essentially unsaturated diene elastomers are understood to mean those diene elastomers that result at least in part from conjugated diene monomers, having a content of members or units of diene origin (conjugated dienes) that are greater than 15 mol.%.

Thus, for example, diene elastomers such as butyl rubbers, nitrile rubbers or copolymers of dienes and of alpha-olefins of the ethylene-propylene diene terpolymer (EPDM) type or the ethylene-vinyl acetate copolymer type do not fall within the preceding definition, and may in particular be described as "essentially saturated" diene elastomers (low or very low content of units of diene origin, *i.e.,* less than 15 mol. %). Particular embodiments of the present invention include no essentially saturated diene elastomers.

Within the category of essentially unsaturated diene elastomers are the highly unsaturated diene elastomers, which are understood to mean in particular diene elastomers having a content of units of diene origin (conjugated dienes) that is greater than 50 mol.%. Particular embodiments of the present invention may include not only no essentially saturated diene elastomers but also no essentially unsaturated diene elastomers that are not highly unsaturated.

The rubber elastomers suitable for use with particular embodiments of the present invention include highly unsaturated diene elastomers, for example, polybutadienes (BR), polyisoprenes (IR), natural rubber (NR), butadiene copolymers, isoprene copolymers and mixtures of these elastomers. The polyisoprenes include synthetic cis-1,4 polyisoprene, which may be characterized as possessing cis-1,4 bonds of more than 90 mol. % or alternatively, of more than 98 mol. %.

Also suitable for use in particular embodiments of the present invention are rubber elastomers that are copolymers and include, for example, butadiene-styrene copolymers (SBR), butadiene-isoprene copolymers (BIR), isoprene-styrene copolymers (SIR) and isoprene-butadiene-styrene copolymers (SBIR) and mixtures thereof.

It should be noted that any of the highly unsaturated elastomers may be utilized in particular embodiments as a functionalized elastomer. These elastomers can be functionalized by reacting them with suitable functionalizing agents prior to or in lieu of terminating the elastomer. Exemplary functionalizing agents include, but are not limited to, metal halides, metalloid halides, alkoxysilanes, imine-containing compounds, esters, ester-carboxylate metal complexes, alkyl ester carboxylate metal complexes, aldehydes or ketones, amides, isocyanates, isothiocyanates, imines, and epoxides. These types of functionalized elastomers are known to those of ordinary skill in the art. While particular embodiments may include one or more of these functionalized elastomers, other embodiments may include one or more of these functionalized elastomers mixed with one or more of the non-functionalized highly unsaturated elastomers.

The rubber composition of the invention disclosed herein include between 35 and 60 phr of a solution polymerized styrene-butadiene rubber. Alternatively, the styrene-butadiene content of the rubber composition may be between 40 and 55 phr, 45 and 55 phr or 40 and 50 phr. The styrene-butadiene is characterized as having a styrene content of between 10 and 35 wt. % or alternatively, between 15 and 30 wt. %, between 20 and 30 wt. % or between 22 and 27 wt. %.

The styrene-butadiene may further be characterized as having a glass transition temperature Tg of between -65 °C and 0 °C as determined by differential scanning calorimetry (DSC) according to ASTM E1356 or alternatively, between -48 °C and 0 °C, -35 °C and -10 °C, -30 °C and -15 °C, or -25 °C and -15 °C. Furthermore, the vinyl content of the butadiene part of the styrene-butadiene may be between 50 and 80 wt. % or alternatively between 55 and 65 wt. % based on the total butadiene content of the styrene-butadiene. Alternatively the vinyl content may range between 20 and 30 wt. %.

In addition to the styrene-butadiene component, the rubber composition disclosed herein further includes between 35 and 60 phr of a polybutadiene component. Alternatively, the polybutadiene content of the rubber composition may be between 40 and 55 phr, 45 and 55 phr or 40 and 50 phr. The polybutadiene may be characterized as having at least 90 wt. % cis 1,4-content and having a Tg of less than -100 °C as determined by differential scanning calorimetry (DSC) according to ASTM E1356 or alternatively, between -108 °C and -103 °C.

Particular embodiments of the present invention may further include as part of the rubber composition disclosed herein no more than 30 phr natural rubber, synthetic polyisoprene rubber or combinations thereof. Alternatively, the amount of such elastomers may range between 0 and 25 phr, 0 and 20 phr, 1 and 20 phr, 0.5 and 10 phr or 0.5 and 5 phr. These ranges may apply to embodiments that include just synthetic polyisoprene and to embodiments that include just natural rubber. The ranges may also apply in certain embodiments to combinations of natural and synthetic polyisoprene rubber. Many embodiments include no other elastomer components other than a styrene-butadiene rubber and a polybutadiene rubber. The elastomeric content of many of the embodiments include the combination of only one styrene-butadiene rubber and only one polybutadiene rubber.

The silica used in particular embodiments of the rubber composition may be any reinforcing silica known to one having ordinary skill in the art, in particular any precipitated or pyrogenic silica having a BET surface area and a specific CTAB surface area both of which are less than 450 m²/g or alternatively, between 30 and 400 m²/g. Particular embodiments include a silica having a CTAB of between 80 and 200 m²/g, between 100 and 190 m²/g, between 120 and 190 m²/g or between 140 and 180 m²/g. The CTAB specific surface area is the external surface area determined in accordance with Standard AFNOR-NFT-45007 of November 1987.

Particular embodiments of the rubber compositions constituting the heavy vehicle tire treads have a BET surface area of between 60 and 250 m²/g or alternatively, of between 80 and 200 m²/g. The BET specific surface area is determined in known manner, in accordance with the method of Brunauer, Emmet and Teller described in "The Journal of the American Chemical Society", vol. 60, page 309, February 1938, and corresponding to Standard AFNOR-NFT-45007 (November 1987).

The silica used in particular embodiments may be further characterized as having a dibutylphthlate (DHP) absorption value of between 100 and 300 ml/100 g or alternatively between 150 and 250 ml/100 g.

Highly dispersible precipitated silicas (referred to as "HD") are used exclusively in particular embodiments of the disclosed rubber composition, wherein "highly dispersible silica" is understood to mean any silica having a substantial ability to disagglomerate and to disperse in an elastomeric matrix. Such determinations may be observed in known manner by electron or optical microscopy on thin sections. Examples of known highly dispersible silicas include, for example, Perkasil KS 430 from Akzo, the silica BV3380 from Degussa, the silicas Zeosil 1165 MP and 1115 MP from Rhodia, the silica Hi-Sil 2000 from PPG and the silicas Zeopol 8741 or 8745 from Huber.

Particular embodiments of the present invention, although not delimitative of the invention, include little or no carbon black or other reinforcement fillers. Particular embodiments that include adding a silane coupling agent that is commercially available on a carbon black substrate do include up to about 50 wt. % of the commercial coupling agent weight as carbon black. The rubber compositions having such amounts of carbon black may be characterized as having essentially no carbon black.

The amount of silica added to the rubber composition disclosed herein is between 45 and 110 phr or alternatively between 45 and 80 phr, between 45 and 70 phr, between 45 and 65 phr or between 50 and 70 phr.

In addition to the silica added to the rubber composition, a proportional amount of a silane coupling agent is also added to the rubber composition. The silane coupling agent is a sulfur-containing organosilicon compound that reacts with the silanol groups of the silica during mixing and with the elastomers during vulcanization to provide improved properties of the cured rubber composition. A suitable coupling agent is one that is capable of establishing a sufficient chemical and/or physical bond between the inorganic filler and the diene elastomer; which is at least bifunctional, having, for example, the simplified general formula "Y-T-X", in which: Y represents a functional group ("Y" function) which is capable of bonding physically and/or chemically with the inorganic filler, such a bond being able to be established, for example, between a silicon atom of the coupling agent and the surface hydroxyl (OH) groups of the inorganic filler (for example, surface silanols in the case of silica); X represents a functional group ("X" function) which is capable of bonding physically and/or chemically with the diene elastomer, for example by means of a sulfur atom; T represents a divalent organic group making it possible to link Y and X.

The silane coupling agent is added to the composition based upon the moles of coupling agent per m²/g of CTAB surface area of 1 kg of the silica in the rubber composition. Per m²/g of CTAB surface area of 1 kg of the silica in the rubber composition, the silane coupling agent may be added in an amount of between 1.94 x 10⁻³ In and 2.55 x 10⁻³/n moles of silane coupling agent, wherein n is the number of silicon atoms in the silane molecule. Alternatively the amount may be between 2.12 x 10⁻³/n and 2.42 x 10⁻³/n moles of silane coupling agent per m²/g of CTAB surface area of 1 kg of the silica. These determinations for the amount of silane coupling agent to add to the rubber composition are based on maintaining about the same amount of silane coupling agent on the surface of the silica based upon the CTAB surface area of the silica.

Therefore, for an exemplary embodiment of a rubber composition having a silica with a CTAB surface area of 200 m²/g and using a silane coupling agent molecule having two atoms of silicon, the amount of silicon coupling agent that may be added may be determined to be between:
(1.94 x 10⁻³/2)(200) = 0.194 moles and
(2.55 x 10⁻³/2)(200) = 0.255 moles
for each 1 kg of silica added to the rubber composition. If the molecular weight of the coupling agent is 425 g/mole, then the amount of coupling agent added to the rubber composition of this example may be between about 82 and 108 g of coupling agent per 1 kg of silica in the rubber composition.

Any of the organosilicon compounds that contain sulfur and are known to one having ordinary skill in the art are useful for practicing embodiments of the present invention. Examples of suitable silane coupling agents having two atoms of silicon in the silane molecule include 3,3'-bis(triethoxysilylpropyl) disulfide and 3,3'-bis(triethoxy-silylpropyl) tetrasulfide. Both of these are available commercially from Degussa as X75-S and X50-S respectively, though not in pure form. Degussa reports the molecular weight of the X50-S to be 532 g/mole and the X75-S to be 486 g/mole. Both of these commercially available products include the active component mixed 50-50 by weight with a N330 carbon black. Other examples of suitable silane coupling agents having two atoms of silicon in the silane molecule include 2,2'-bis(triethoxysilylethyel) tetrasulfide, 3,3'-bis(tri-t-butoxysilylpropyl) disulfide and 3,3'-bis(di t- butylmethoxysilylpropyl) tetrasulfide. Examples of silane coupling agents having just one silicon atom in the silane molecule include, for example, 3,3'(triethoxysilylpropyl) disulfide and 3,3' (triethoxy-silylpropyl) tetrasulfide.

The rubber compositions disclosed herein are cured with a sulfur curing system that may include free sulfur and a sulfenamide accelerator in a proportional amount. Suitable free sulfur includes, for example, pulverized sulfur, rubber maker's sulfur, commercial sulfur, and insoluble sulfur. The amount of free sulfur included in the rubber composition may range between 0.2 and 0.8 phr or alternatively between 0.3 and 0.7 phr, between 0.3 and 0.6 phr or between 0.3 and 0.5 phr. Some embodiments include no free sulfur added in the curing system.

The sulfenamide accelerator is added in a proportional amount to the amount of free sulfur added in the curing system. The ratio of the weight of sulfenamide accelerator to the weight of free sulfur may range between 2 and 7 or alternatively between 2 and 6 or 3 and 5. Alternatively, for those embodiments having no sulfur, the amount of sulfenamide accelerator is added in an amount of between 2 and 4 phr or alternatively between 2.2 and 3.2 pbr, 2.4 and 3.0 phr or 2.6 and 2.9 phr.

Sulfenamide accelerators are well known in the art. Examples of suitable sulfenamide accelerators include n-cyclohexyl -2-benzothiazole sulfenamide (CBS), N-tert-butyl-2-benzothiazole Sulfenamide (TBBS), N-Oxydiethyl-2-benzthiazolsulfenamid (MBS) and N-dicyclohexyl-2-benzothiazolesulfenamide (DCBS). Particular embodiments utilize CBS solely as the sulfenamide accelerator.

Particular embodiments of the rubber composition disclosed herein include no processing oil. Such oils are well known to one having ordinary skill in the art, are generally extracted from petroleum, and are classified as being paraffinic, aromatic or naphthenic type processing oil and including MES and TDAE oils. Some embodiments of the rubber composition may include an elastomer, such as a styrene-butadiene rubber, that has been extended with one or more such processing oils but such oil is limited in the rubber composition as being no more than 10 phr of the total elastomer content of the rubber composition or alternatively, no more than 8 phr, no more than 6 phr or no more than 4 phr. Likewise other rubber compositions in accordance with the present invention that do not include an extended elastomer may include no more than the same amount of processing oils as might be contained in an extended elastomer as noted above.

As noted previously, processing oil generally compromises the durability of the cured rubber in exchange from an improvement in the processability of the uncured rubber mix. However, the use of the amide processing aid disclosed herein provides the improved processability without the compromise to wear indicators obtained when a processing oil is used.

Other additives can be added to the rubber composition disclosed herein as known in the art. Such additives may include, for example, some or all of the following: antidegradants, antioxidants, fatty acids, waxes, stearic acid, zinc oxide and other accelerators. Examples of antidegradants and antioxidants include 6PPD, 77PD, IPPD and TMQ and may be added to rubber compositions in an amount of from 0.5 and 5 phr. Zinc oxide may be added in an amount of between 1 and 6 phr or 2 and 4 phr. Waxes may be added in an amount of between 1 and 5 phr.

Accelerators are used to control the time and/or temperature required for vulcanization and to improve the properties of the cured rubber composition. As noted above, the primary accelerator in the rubber composition disclosed herein is a sulfenamide, which is added in an amount that is proportional to the amount of sulfur added. Combinations of accelerators are often useful to improve the properties of the cured rubber composition and the particular embodiments include the addition of secondary accelerators.

Particular embodiments may include the use of a moderately fast accelerator such as, for example, diphenylguanidine (DPG), triphenyl guanidine (TPG), diorthotolyl guanidine (DOTG), o-tolylbigaunide (OTBG) or hexamethylene tetramine (HMTA). Such accelerators may be added in an amount of up to 4 phr, between 0.5 and 3 phr, between 0.5 and 2.5 phr or between 1 and 2 phr. Particular embodiments may exclude the use of fast accelerators and/or ultra-fast accelerators such as, for example, the fast accelerators: disulfides and benzothiazoles; and the ultra-accelerators: thiurams, xanthates, dithiocarbamates and dithiophosphates.

The invention is further illustrated by the following examples, which are to be regarded only as illustrations and not delimitative of the invention in any way. The properties of the compositions disclosed in the examples were evaluated as described below.

Moduli of elongation (MPa) were measured at 10% (MA10), 100% (MA 100) and at 300% (MA 300) at a temperature of 23 °C based on ASTM Standard D412 on dumb bell test pieces. The measurement were taken in the second elongation; *i.e.,* after an accommodation cycle. These measurements are secant moduli in MPa, based on the original cross section of the test piece.

The Mooney viscosity ML(1+4) at 100 °C is measured in accordance with Standard ASTM D 1646 of 1999.

Dynamic characteristics of the materials were measured on an MTS 831 Elastomer Test System in accordance with ASTM D5992. The response of a sample of vulcanized material (cylindrical test piece of a thickness of 4 mm and a section of 400 mm²), subjected to an alternation single sinusoidal shearing stress, at a frequency of 10 Hz and at 80 °C, is recorded. Scanning is effected at an amplitude of deformation of 0.1 to 50% (outward cycle), then of 50% to 0.1% (return cycle). The shear modulus G* at 10% deformation in MPa and the maximum value of the tangent of the loss angle tan delta (max tan δ) was determined during the return cycle.

The invention is further illustrated by the following examples, which are to be regarded only as illustrations and not delimitative of the invention in any way.

### Example 1

This example provides comparisons between rubber compositions having the amide processing aid and those without. The example also provides a comparison of a rubber composition having oil added as a processing aid and a rubber composition having the amide processing aid. The example also provides comparisons for rubber compositions with and without natural rubber added.

Two thermochemical stages were used to prepare the rubber compositions having the material components shown in Table 1 (amounts shown in phr). First, the elastomers, 2/3 of the silica and all of the other ingredients except for the remaining silica and vulcanization agents were introduced into a 3.5 liter (W1, W2, F1) or 8.2 liter (W3, F2, F3) Banbury-type mixer in the amounts shown in Table 1. After approximately 30 seconds, the remaining 1/3 of the silica was added and the material was mixed until a temperature was reached between 145 °C and 170 °C. The mixture was then dropped and cooled to a temperature below 100 °C.

**Table 1- Rubber Formulations and Physical Properties**

| **Formulations** | **W1** | **W2** | **W3** | **F1** | **F2** | **F3** |
|---|---|---|---|---|---|---|
| Natural Rubber | 0 | 0 | 20 | 0 | 20 | 20 |
| Styrene-Butadiene | 50 | 50 | 40 | 50 | 40 | 40 |
| Polybutadiene | 50 | 50 | 40 | 50 | 40 | 40 |
| Silica | 56 | 56 | 56 | 56 | 56 | 56 |
| Naphthenic Oil | 0 | 5 | 0 | 0 | 0 | 0 |
| Coupling Agent (X50-S)^{†} | 11.2 | 11.2 | 112 | 11.2 | 11.2 | 11.2 |
| Amide Processing Aid | 0 | 0 | 0 | 5 | 4 | 5 |
| Paraffin | 1 | 1 | 1 | 1 | 1 | 1 |
| Zinc Oxide | 3 | 3 | 3 | 3 | 3 | 3 |
| Sulfur | 0.4 | 0.4 | 0.4 | 0.4 | 0.4 | 0.4 |
| CBS | 1.65 | 1.65 | 1.85 | 1.65 | 1.85 | 1.85 |
| Stearic Acid | 2.5 | 2.5 | 2.5 | 2.5 | 2.5 | 2.5 |
| DPG | 1.58 | 1.58 | 0.79 | 1.58 | 0.79 | 0.79 |
| Antidegradants | 2.5 | 2.5 | 2.5 | 2.5 | 2.5 | 2.5 |
| | | | | | | |

| **Physical Properties** | | | | | | |
|---|---|---|---|---|---|---|
| **Uncured Mix** | | | | | | |
| ML (1+4) | 90.8 | 87.1 | 91.9 | 73.2 | 75.3 | 73.3 |
| | | | | | | |

| **Cured** | | | | | | |
|---|---|---|---|---|---|---|
| MA10 | 6.78 | 5.99 | 5.21 | 7.36 | 6.69 | 6.98 |
| MA100 | 2.43 | 2.19 | 1.96 | 2.45 | 2.56 | 2.60 |
| MA300 | 2.99 | 2.65 | 2.31 | 2.81 | 2.86 | 2.78 |
| G* 10% p-p | 2.26 | 2.1 | 1.81 | 2.27 | 2.02 | 2.02 |
| Max tan δ | 0.149 | 0.152 | 0.13 | 0.141 | 0.13 | 0.13 |

| | | | | | | |
|---|---|---|---|---|---|---|
| ^{†}The coupling agent is only 50 wt.% as shown of active ingredient and 50 wt. % N330 carbon black. | | | | | | |

The silica used in the rubber compositions of Table 1 was ZEOSIL 1165, a highly dispersible silica available from Rhodia. The styrene-butadiene rubbers had a Tg of -20 °C.

The polybutadiene had a Tg of -105 °C and a cis 1,4-content of 93 %. The coupling agent was X50-S, available from Degussa, which is a 50-50 wt. % blend of 3,3'-bis(triethoxysilylpropyl) polysulfide (3.70 sulfurs) and N330 carbon black. Therefore, the amount of actual active coupling agent shown in Table 1 is only 50 wt. % of the amount shown, *i.e*., only 50 wt. % is the active ingredient 3,3'-bis(triethoxysilylpropyl) polysulfide.

The sulfenamide accelerator was n-cyclohexyl -2-benzothiazole sulfenamide (CBS) with an additional accelerator added as diphenylguanidine (DPG).

In the second thermochemical stage, the cooled mixture was transferred to a mill having two cylinders that operated at a speed of 30 RPM. The vulcanizing agents were added and mixing continued until the vulcanizing agents were well dispersed. The rubber compositions were rolled into sheets and cured for the 30 minutes at a temperature of 150 °C for all the materials. The cured sheets were then cut into testing pieces suitable for the testing methods utilized to determine the physical characteristics of the examples.

The first three compositions shown in Table 1 contain none of the amide processing aid but do include naphthenic oil (W2) and natural rubber (W3). The last three compositions contain 5, 4 and 5 phr of the amide processing aid respectively. Of the last three compositions, F2 and F3 both include natural rubber.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

## Claims

1. A heavy vehicle tire tread formed from a material that is based upon a cross-linkable rubber composition, the cross-linkable rubber composition comprising, per 100 parts by weight of rubber:
between 35 and 60 phr of a solution polymerized styrene-butadiene rubber having a styrene content of between 10 wt. % and 35 wt. %;
between 35 and 60 phr of a polybutadiene;
between 45 and 110 phr of silica;
between 1 and 8 phr of an amide processing aid, the processing aid comprising one or more amides of the form 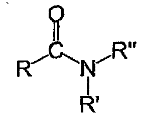 wherein R is an aliphatic chain of between 14 and 20 carbons, R' is selected from H or an aliphatic chain of between 1 and 4 carbons and R" is selected from an aliphatic chain of between 1 and 4 carbons having an -OH moiety;
a sulfur-containing organosilicon silane coupling agent; and
a sulfur curing system.

2. The heavy vehicle tire tread of claim 1, wherein the rubber composition further comprises between 0.5 and 30 phr of a natural rubber.

3. The heavy vehicle tire tread of claims 1 or 2, wherein the rubber composition further comprises less than 1 phr of a processing oil.

4. The heavy vehicle tire tread of claim of any one of claims 1-3, wherein the styrene content of the styrene-butadiene rubber is between 20 wt. % and 30 wt. %.

5. The heavy vehicle tire tread of any one of claims 1-4, wherein the Tg of the styrene-butadiene rubber is between -25 °C and -15 °C.

6. The heavy vehicle tire tread of any one of claims 1-5, wherein a butadiene part of the styrene-butadiene rubber has a vinyl content of between 50 wt. % and 80 wt. %.

7. The heavy vehicle tire tread of claim 6, wherein the vinyl content is between 55 wt. % and 65 wt. %.

8. The heavy vehicle tire tread of any one of claims 1-7, wherein R' is H.

9. The heavy vehicle tire tread of any one of claims 1 or 3-9, wherein the composition includes no natural rubber.

10. The heavy vehicle tire tread of any one of claims 1-9, wherein the composition includes essentially no carbon black.

11. The heavy vehicle tire tread of any one of claims 1-10, wherein the sulfur curing system comprises a sulfenamide accelerator and between 0.3 and 0.8 phr of free sulfur, wherein a ratio of the sulfenamide accelerator and the sulfur is between 2 and 7.

12. The heavy vehicle tire tread of any one of claims 1-11, wherein the composition includes the sulfur-containing organosilicon silane coupling agent in an amount of between (1.94 x 10⁻³/n)(S) and (2.55 x 10⁻³/n)(S) moles per 1 kg of the silica, wherein n is a number of silicon atoms in a molecule of the silane coupling agent and S is a CTAB surface area in m²/g of the silica.

13. The heavy vehicle tire tread of any one of claims 1-12, wherein the tread thickness is between 10 mm and 19 mm before being worn.

14. The heavy vehicle tire tread of any one of claims 1-13, wherein the silica has a CTAB of between 140 m²/g and 180 m²/g.

15. The heavy vehicle tire tread of any one of claims 1-14, wherein the tire tread is a truck tire tread of a cap/base construction and wherein the cap, the base or both are manufactured from the cross-linkable rubber composition.

## Patentansprüche

1. Schwerfahrzeugreifenprofil aus einem Material, das auf einer vernetzbaren Kautschukmischung basiert, wobei die vernetzbare Kautschukmischung, pro 100 Gewichtsteile Kautschuk, Folgendes umfasst:
zwischen 35 und 60 phr eines lösungspolymerisierten Styrol-Butadien-Kautschuks mit einem Styrolgehalt zwischen 10 Gew.-% und 35 Gew.-%;
zwischen 35 und 60 phr eines Polybutadiens;
zwischen 45 und 110 phr Siliciumdioxid;
zwischen 1 und 8 phr eines Verarbeitungshilfsmittels auf Amidbasis, wobei das Verarbeitungshilfsmittel ein oder mehrere Amide der folgenden Form umfasst: 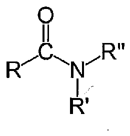 worin R eine aliphatische Kette von 14 bis 20 Kohlenstoffen ist, R' aus H oder einer aliphatischen Kette von 1 bis 4 Kohlenstoffen ausgewählt ist und R" aus einer aliphatischen Kette von 1 bis 4 Kohlenstoffen mit einem -OH-Anteil ausgewählt ist;
ein schwefelhaltiges siliciumorganisches Silankopplungsmittel; und
ein Schwefelhärtungssystem.

2. Schwerfahrzeugreifenprofil nach Anspruch 1, wobei die Kautschukmischung ferner zwischen 0,5 und 30 phr eines Naturkautschuks umfasst.

3. Schwerfahrzeugreifenprofil nach Anspruch 1 oder 2, wobei die Kautschukmischung ferner weniger als 1 phr eines Weichmacheröls umfasst.

4. Schwerfahrzeugreifenprofil nach einem der Ansprüche 1-3, wobei der Styrolgehalt des Styrol-Butadien-Kautschuks zwischen 20 Gew.-% und 30 Gew.-% liegt.

5. Schwerfahrzeugreifenprofil nach einem der Ansprüche 1-4, wobei der Tg-Wert des Styrol-Butadien-Kautschuks zwischen -25°C und -15°C liegt.

6. Schwerfahrzeugreifenprofil nach einem der Ansprüche 1-5, wobei der Butadienteil des Styrol-Butadien-Kautschuks einen Vinylgehalt zwischen 50 Gew.-% und 80 Gew.-% hat.

7. Schwerfahrzeugreifenprofil nach Anspruch 6, wobei der Vinylgehalt zwischen 55 Gew.-% und 65 Gew.-% liegt.

8. Schwerfahrzeugreifenprofil nach einem der Ansprüche 1-7, wobei R' H ist.

9. Schwerfahrzeugreifenprofil nach einem der Ansprüche 1 oder 3-9, wobei die Mischung keinen Naturkautschuk enthält.

10. Schwerfahrzeugreifenprofil nach einem der Ansprüche 1-9, wobei die Mischung im Wesentlichen keinen Ruß enthält.

11. Schwerfahrzeugreifenprofil nach einem der Ansprüche 1-10, wobei das Schwefelhärtungssystem einen Sulfenamidbeschleuniger und zwischen 0,3 und 0,8 phr freien Schwefel umfasst, wobei ein Verhältnis des Sulfenamidbeschleunigers und des Schwefels zwischen 2 und 7 liegt.

12. Schwerfahrzeugreifenprofil nach einem der Ansprüche 1-11, wobei die Mischung das schwefelhaltige siliciumorganische Silankopplungsmittel in einer Menge zwischen (1,94 x 10⁻³/n)(S) und (2,55 x 10⁻³/n)(S) Mol pro 1 kg Siliciumdioxid enthält, wobei n eine Zahl von Siliciumatomen in einem Molekül des Silankopplungsmittels ist und S eine CTAB-Oberfläche in m²/g des Siliciumdioxids ist.

13. Schwerfahrzeugreifenprofil nach einem der Ansprüche 1-12, wobei die Profildicke zwischen 10 mm und 19 mm beträgt, bevor das Profil abgenutzt ist.

14. Schwerfahrzeugreifenprofil nach einem der Ansprüche 1-13, wobei das Siliciumdioxid ein CTAB zwischen 140 m²/g und 180 m²/g besitzt.

15. Schwerfahrzeugreifenprofil nach einem der Ansprüche 1-14, wobei das Reifenprofil ein LkW-Reifenprofil mit einer Krone/Basis-Konstruktion ist und wobei die Krone, die Basis oder beide aus der vernetzbaren Kautschukmischung hergestellt sind.

## Revendications

1. Bande de roulement de pneumatique pour véhicule lourd, faite d'une matière à base de composition de caoutchouc réticulable comprenant, pour 100 parties en poids de caoutchouc :
entre 35 et 60 ppc (parties en poids pour 100 parties en poids de caoutchouc) de caoutchouc styrène-butadiène polymérisé en solution à teneur en styrène de 10 % en poids à 35 % en poids ;
entre 35 et 60 ppc d'un polybutadiène ;
entre 45 et 110 ppc de silice ;
entre 1 et 8 ppc d'un auxiliaire de traitement par amide(s), l'auxiliaire de traitement comprenant un ou plusieurs amides sous la forme 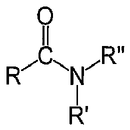 où R est une chaîne aliphatique de 14 à 20 carbones, R' est choisi parmi H et une chaîne aliphatique de 1 à 4 carbones et R" est choisi dans une chaîne aliphatique de 1 à 4 carbones à fraction -OH ;
un agent de pontage en silane organosilicié contenant du soufre ; et
un système de vulcanisation au soufre.

2. Bande de roulement de pneumatique pour véhicule lourd selon la revendication 1, dans laquelle la composition de caoutchouc comprend en outre de 0,5 à 30 ppc d'un caoutchouc naturel.

3. Bande de roulement de pneumatique pour véhicule lourd selon la revendication 1 ou 2, dans laquelle la composition de caoutchouc comprend en outre moins de 1 ppc d'une huile de traitement.

4. Bande de roulement de pneumatique pour véhicule lourd selon l'une quelconque des revendications 1 à 3, dans laquelle la teneur en styrène du caoutchouc styrène-butadiène est de 20 % en poids à 30 % en poids.

5. Bande de roulement de pneumatique pour véhicule lourd selon l'une quelconque des revendications 1 à 4, dans laquelle la température de transition vitreuse Tg du caoutchouc styrène-butadiène est de -25°C à -15°C.

6. Bande de roulement de pneumatique pour véhicule lourd selon l'une quelconque des revendications 1 à 5, dans laquelle une partie butadiène du caoutchouc styrène-butadiène a une teneur en vinyle de 50 % en poids à 80 % en poids.

7. Bande de roulement de pneumatique pour véhicule lourd selon la revendication 6, dans laquelle la teneur en vinyle est de 55 % en poids à 65 % en poids.

8. Bande de roulement de pneumatique pour véhicule lourd selon l'une quelconque des revendications 1 à 7, dans laquelle R' est constitué de H.

9. Bande de roulement de pneumatique pour véhicule lourd selon l'une quelconque des revendications 1 ou 3 à 9, dans laquelle la composition ne comprend pas de caoutchouc naturel.

10. Bande de roulement de pneumatique pour véhicule lourd selon l'une quelconque des revendications 1 à 9, dans laquelle la composition ne comprend sensiblement pas de noir de carbone.

11. Bande de roulement de pneumatique pour véhicule lourd selon l'une quelconque des revendications 1 à 10, dans laquelle le système de vulcanisation au soufre contient un accélérateur du type sulfénamide et de 0,3 à 0,8 ppc de soufre libre, un rapport de l'accélérateur du type sulfénamide au soufre étant de 2 à 7.

12. Bande de roulement de pneumatique pour véhicule lourd selon l'une quelconque des revendications 1 à 11, dans laquelle la composition comprend l'agent de pontage en silane organosilicié contenant du soufre à raison de (1,94 x 10⁻³/n)(S) à (2,55 x 10⁻³/n)(S) moles par kg de silice, n étant un nombre d'atomes de silicium dans une molécule de l'agent de pontage en silane et S étant une surface spécifique CTAB en m²/g de la silice.

13. Bande de roulement de pneumatique pour véhicule lourd selon l'une quelconque des revendications 1 à 12, dans laquelle l'épaisseur de la bande de roulement est de 10 mm à 19 mm avant usure.

14. Bande de roulement de pneumatique pour véhicule lourd selon l'une quelconque des revendications 1 à 13, dans laquelle la silice a une surface spécifique CTAB de 140 m²/g à 180 m²/g.

15. Bande de roulement de pneumatique pour véhicule lourd selon l'une quelconque des revendications 1 à 14, la bande de roulement de pneumatique étant une bande de roulement pour pneumatique de camion à structure chape/base, et dans laquelle la chape, la base ou les deux est/sont fabriquée(s) à l'aide de la composition de caoutchouc réticulable.
